# EUROPEAN PATENT APPLICATION

(11) **EP 4 803 707 A1**
(43) Date of publication of application: **09.09.2026**
(21) Application number: 24885249.3
(22) Date of filing: 15.08.2024
(51) Int. Cl.: E02F 9/00, E02F 9/08, H01M 8/04

(54) **HYDROGEN TANK DEVICE OF CONSTRUCTION MACHINE, AND CONSTRUCTION MACHINE INCLUDING SAME**

(30) Priority: 31.10.2023 JP 2023187063
(71) Applicant: KAWASAKI JUKOGYO KABUSHIKI KAISHA, Kobe-shi, Hyogo 650-8670 (JP)
(72) Inventor: FUJIE, Masatsugu, Kobe-shi, Hyogo 650-8670 (JP); TANAKA, Shinichiro, Kobe-shi, Hyogo 650-8670 (JP); MIYOSHI, Ryo, Kobe-shi, Hyogo 650-8670 (JP)
(74) Representative: EIP
(86) International application number: PCT/JP2024/029127
(87) International publication number: WO 2025/094472

(57) **Abstract**

This hydrogen tank device includes: a frame body that is plate-shaped and has a rectangular shape as viewed from one side in a first direction; and a plurality of hydrogen tanks mounted parallel to each other on the frame body and each of which extends in the longitudinal direction of the frame body. The frame body includes, on the one side in the first direction, a mounting surface to be mounted on a frame of a construction machine.

## Description

### Technical Field

The present disclosure relates to hydrogen tank devices installed in construction machines, and to construction machines including the same.

### Background Art

Installing fuel cells in place of diesel engines in construction machines to achieve carbon neutrality has been studied. A known example of a construction machine equipped with fuel cells is the hydraulic excavator disclosed in Patent Literature (PTL) 1. In the hydraulic excavator disclosed in PTL 1, fuel cells generate electric power using hydrogen supplied from hydrogen tanks and oxygen in the atmosphere. The generated electric power is supplied to an electric pump device. Accordingly, the electric pump device is driven, and working oil is discharged. When the working oil is supplied to a hydraulic actuator such as a boom cylinder, the hydraulic excavator operates.

### Citation List

### Patent Literature

PTL 1: Japanese Patent No. 7149447

### Summary of Invention

### Technical Problem

As mentioned above, the hydraulic excavator disclosed in PTL 1 includes elements, such as hydrogen tanks and fuel cells, different from those in conventional hydraulic excavators. However, in a hydraulic excavator such as that disclosed in PTL 1, it is desirable that a frame or the like of a hydraulic excavator equipped with a diesel engine (that is, a conventional hydraulic excavator) is used as it is without the need for designing a dedicated frame. Therefore, there is a demand for a structure in which the hydrogen tanks can be easily mounted on the frame.

Thus, an object of the present disclosure is to provide a hydrogen tank device that allows a hydrogen tank to be easily mounted on a frame of a construction machine, and to provide a construction machine including the hydrogen tank device.

### Solution to Problem

A hydrogen tank device according to the present disclosure includes: a frame body that is plate-shaped and has a rectangular shape as viewed from one side in a first direction; and a plurality of hydrogen tanks mounted parallel to each other on the frame body, each of the plurality of hydrogen tanks extending in a longitudinal direction of the frame body. The frame body includes, on the one side in the first direction, a mounting surface to be mounted on a frame of a construction machine.

According to the present disclosure, the frame body on which the plurality of hydrogen tanks are mounted is configured to be mounted on the frame of the construction machine. Therefore, the plurality of hydrogen tanks integrated as a unit can be mounted on the frame of the construction machine. This facilitates the mounting of the hydrogen tanks on the construction machine.

A hydrogen tank device according to the present disclosure includes: a frame body that is plate-shaped, has a thickness in a first direction, and extends in a second direction; a plurality of hydrogen tanks mounted parallel to each other on the frame body, each of the plurality of hydrogen tanks extending in the second direction of the frame body; and a plurality of mounting members arranged on the frame body and spaced apart in the second direction. The frame body includes, on one side in the first direction, a mounting surface to be mounted on a frame of a construction machine. The plurality of hydrogen tanks are mounted on the frame body by attaching the plurality of mounting members to the plurality of hydrogen tanks such that the plurality of hydrogen tanks protrude from the frame body on the other side in the first direction.

According to the present disclosure, the plurality of hydrogen tanks are mounted on the frame body by attaching the plurality of mounting members to the plurality of hydrogen tanks such that the plurality of hydrogen tanks protrude from the frame body on the other side in the first direction. Thus, the plurality of hydrogen tanks can be mounted on the frame body at the projected positions, facilitating the mounting of the hydrogen tanks on the frame body.

A construction machine according to the present disclosure includes: any of the hydrogen tank devices described above; a fuel cell that generates electric power using hydrogen supplied from the hydrogen tank device; and an electric pump device that is driven by the electric power supplied from the fuel cell.

According to the present disclosure, a construction machine having the above-described functions can be realized.

A construction machine according to the present disclosure includes: a hydrogen tank device including a frame body that is plate-shaped, has a thickness in a first direction, and extends in a second direction, and a plurality of hydrogen tanks mounted parallel to each other on the frame body, each of the plurality of hydrogen tanks extending in the second direction; and a frame including an upright part standing in a manner to extend upwardly. The hydrogen tank device is mounted on the frame such that a mounting surface of the frame body located on one side in the first direction is brought into abutment with the upright part.

According to the present disclosure, the hydrogen tank device is mounted on the frame such that the mounting surface of the frame body located on one side in the first direction is brought into abutment with a side surface of the frame. Therefore, the plurality of hydrogen tanks integrated as a unit are mounted on the frame of the construction machine. This facilitates the mounting of the hydrogen tanks on the construction machine.

### Advantageous Effects of Invention

According to the present disclosure, a hydrogen tank can be easily mounted on a frame of a construction machine.

The above object, other objects, features, and advantages of the present disclosure will be made clear by the following detailed explanation of preferred embodiments with reference to the attached drawings.

### Brief Description of Drawings

[Fig. 1] Fig. 1 is a perspective view of a construction machine including a hydrogen tank device according to Embodiment 1 of the present disclosure.
[Fig. 2] Fig. 2 is a plan view of the construction machine of Fig. 1.
[Fig. 3] Fig. 3 is a perspective view of a hydrogen tank device installed in the construction machine of Fig. 1.
[Fig. 4] Fig. 4 is an enlarged perspective view of the hydrogen tank device of Fig. 3.
[Fig. 5] Fig. 5 is a perspective view of a hydrogen tank device removed from a frame.
[Fig. 6] Fig. 6 is a front view of the hydrogen tank device of Fig. 5.
[Fig. 7] Fig. 7 is a front view of a frame body of the hydrogen tank device of Fig. 6.
[Fig. 8] Fig. 8 is a cross-sectional view of the frame body taken along cut line VIII-VIII indicated in Fig. 7.
[Fig. 9] Fig. 9 is an enlarged front view of a supply system unit removed from the hydrogen tank device of Fig. 3.
[Fig. 10] Fig. 10 is a front view of a hydrogen tank device according to Embodiment 2 of the present disclosure.
[Fig. 11] Fig. 11 is a perspective view of a hydrogen tank device according to another embodiment.
[Fig. 12] Fig. 12 is a front view of a hydrogen tank device according to yet another embodiment.

### Description of Embodiments

Hereinafter, hydrogen tank devices 1F, 1R according to Embodiment 1 of the present disclosure, a hydrogen tank device 1A according to Embodiment 2 of the present disclosure, and a construction machine 2 according to the present disclosure will be described with reference to the aforementioned drawings. Note that the concept of directions mentioned in the following description is used for the sake of explanation; the orientations, etc., of elements according to the present disclosure are not limited to these directions. Each of the hydrogen tank devices 1F, 1R, 1A and the construction machine 2 described below is merely an embodiment of the present disclosure. Thus, the present disclosure is not limited to the embodiments and may be subject to addition, deletion, and alteration within the scope of the essence of the present disclosure.

### <Embodiment 1>

### [Construction Machine]

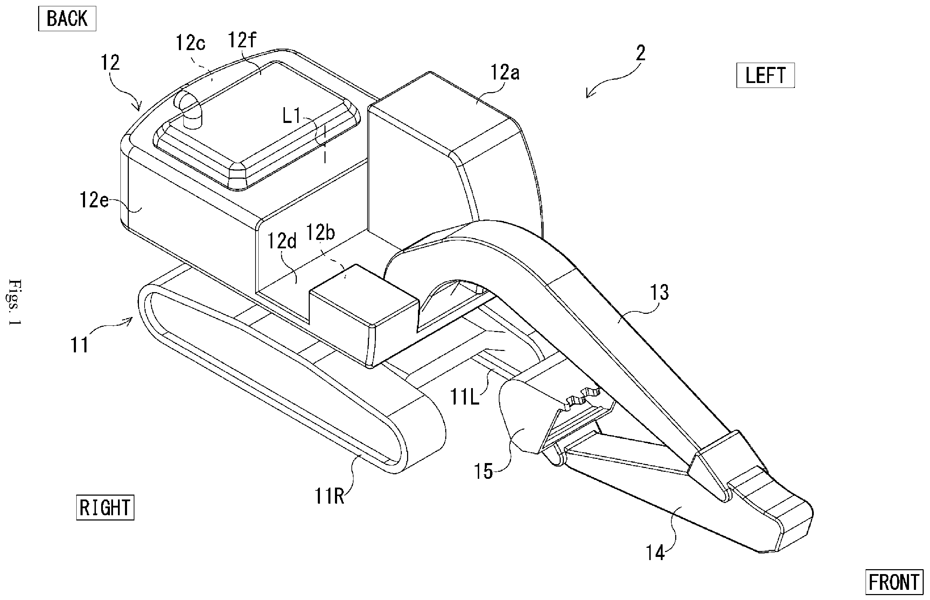

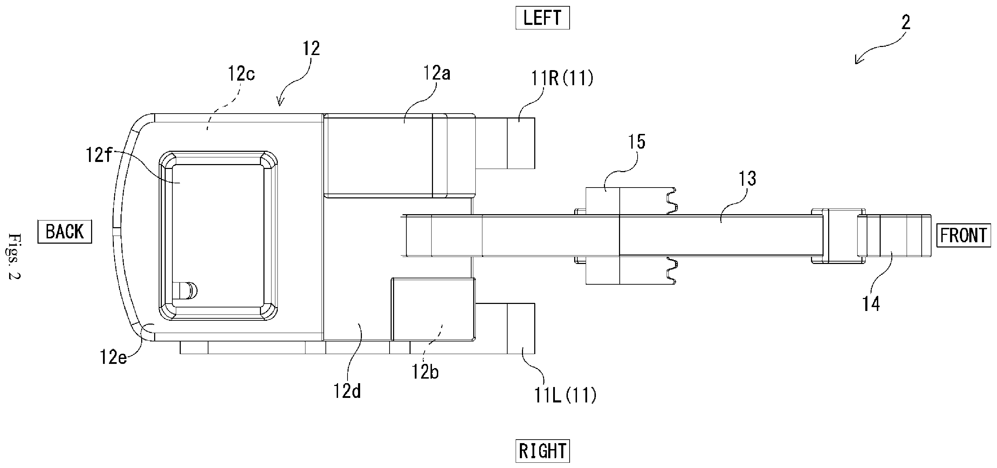

The construction machine 2 illustrated in Figs. 1 and 2 operates using hydrogen as a fuel. In the present embodiment, the construction machine 2 is an excavator 2. The excavator 2 includes a traveling device 11, a slewing body 12, a boom 13, an arm 14, and a bucket 15. The traveling device 11 includes, for example, a pair of crawlers 11L, 11R. Each of the crawlers 11L, 11R can be driven to move in various directions. The slewing body 12 is disposed on the traveling device 11 so as to be rotatable about a pivot axis L1 extending in the vertical direction. The boom 13 is disposed on the slewing body 12 so as to be pivotable in the vertical direction. The arm 14 is disposed on a leading end portion of the boom 13 so as to be pivotable in the longitudinal direction. Furthermore, the bucket 15 is disposed on a leading end portion of the arm 14 so as to be pivotable in the longitudinal or vertical direction. Note that the longitudinal direction is, for example, the direction in which the boom 13 extends.

Furthermore, a hydraulic actuator not illustrated in the drawings is disposed in each of the traveling device 11, the slewing body 12, the boom 13, the arm 14, and the bucket 15. More specifically, traveling motors are disposed in the respective crawlers 11L, 11R of the traveling device 11. The traveling motors are supplied with working fluid to drive the crawlers 11L, 11R. This allows the traveling device 11 to move in various directions. Note that the working fluid is, for example, a liquid such as oil. Furthermore, a slewing motor not illustrated in the drawings is disposed in the slewing body 12. When supplied with the working fluid, the slewing motor causes the slewing body 12 to slew. Furthermore, cylinders not illustrated in the drawings are disposed on the boom 13, the arm 14, and the bucket 15. When supplied with the working fluid, the cylinders pivot the boom 13, the arm 14, and the bucket 15.

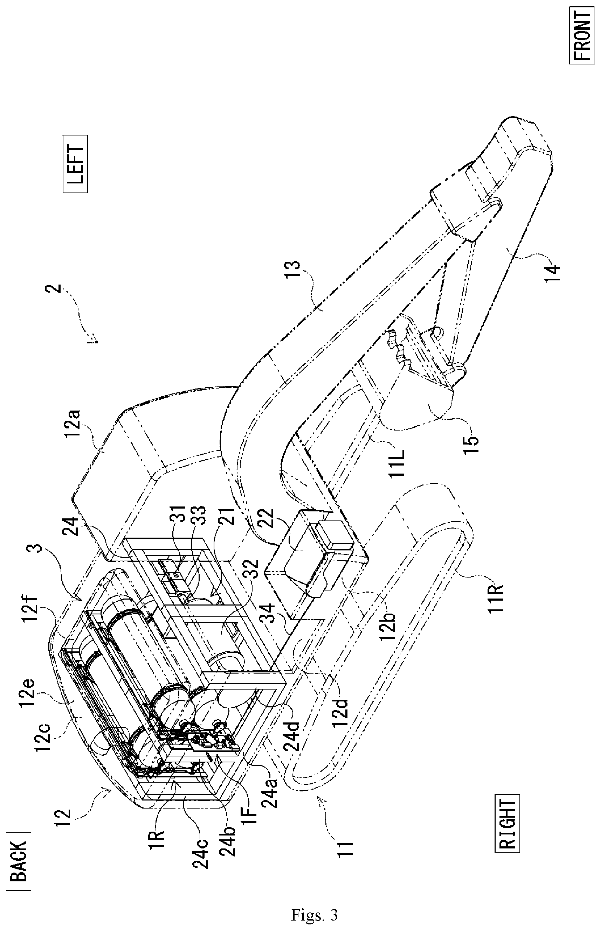

Furthermore, the excavator 2 includes a hydraulic drive system 3. The hydraulic drive system 3 supplies the working fluid to each of the aforementioned hydraulic actuators to drive the hydraulic actuator. The hydraulic drive system 3 includes an electric pump device 21, a fuel cell 22, and the plurality of hydrogen tank devices 1F, 1R, as illustrated in Fig. 3. Note that in the present embodiment, the hydraulic drive system 3 includes two hydrogen tank devices 1F, 1R. Furthermore, in order to control the flow of the working fluid supplied to each hydraulic actuator, the hydraulic drive system 3 includes a multi-control valve not illustrated in the drawings.

The electric pump device 21 is driven by the electric power supplied from the fuel cell 22, which will be described in detail later. The electric pump device 21 discharges the working fluid. More specifically, the electric pump device 21 includes a hydraulic pump 31 and an electric motor 32. The hydraulic pump 31 is rotatably driven to discharge the working fluid. The hydraulic pump 31 is, for example, a tandem swash plate piston pump. Note that the hydraulic pump 31 may alternatively be a single-unit swash plate piston pump or may alternatively be another type of hydraulic pump such as an axial piston pump or a gear pump. The electric motor 32 is coupled to the hydraulic pump 31. The electric motor 32 receives the electric power supplied thereto, and rotatably drives the hydraulic pump 31. Accordingly, the hydraulic pump 31 discharges the working fluid. In the electric pump device 21 configured as just described, for example, the hydraulic pump 31 and the electric motor 32 share a shaft member 33, and the hydraulic pump 31 and the electric motor 32 are arranged in a straight line.

The multi-control valve (not illustrated in the drawings) is connected to the electrical pump device 21 and each hydraulic actuator (not illustrated in the drawings). The multi-control valve can control the flow of the working fluid discharged from the electric pump device 21 and supply the working fluid to each hydraulic actuator. Accordingly, the traveling device 11, the slewing body 12, the boom 13, the arm 14, and the bucket 15 can be actuated.

The fuel cell 22 generates electric power by oxygen and hydrogen supplied thereto. Although not illustrated in the drawings, the fuel cell 22 is electrically connected to the electric pump device 21. More specifically, the fuel cell 22 is electrically connected to the electric motor 32. By supplying the generated electric power to the electric motor 32, the fuel cell 22 drives the electric pump device 21. Thus, the working fluid can be supplied to each hydraulic actuator.

### [Hydrogen Tank Device]

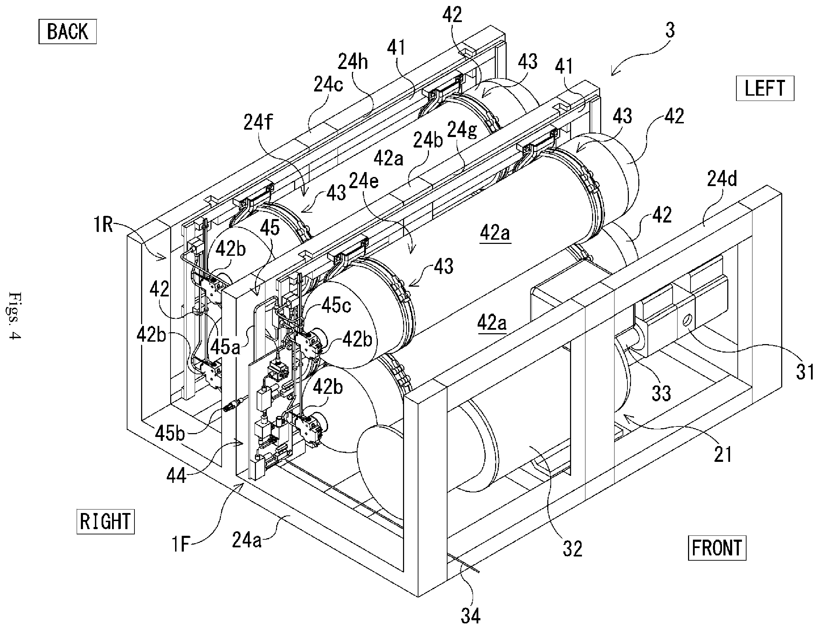

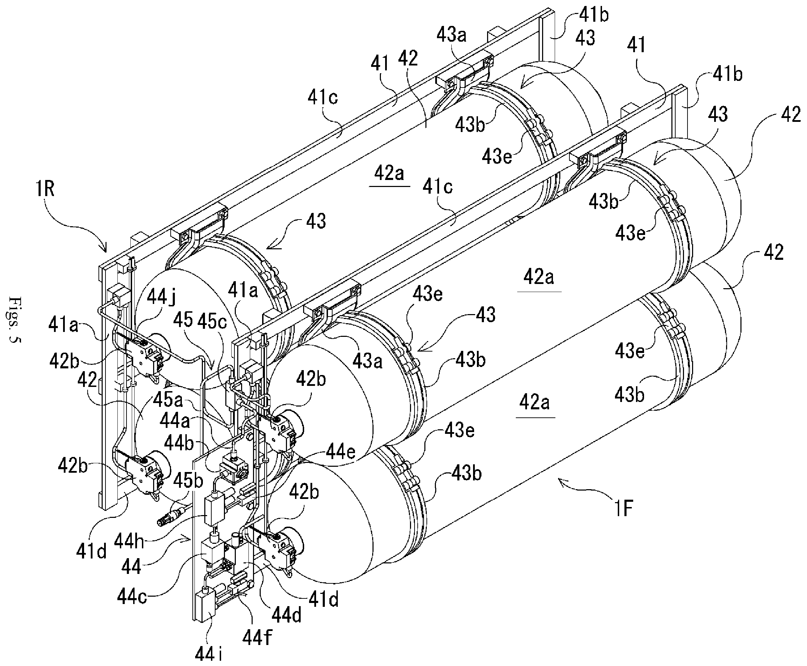

The two hydrogen tank devices 1F, 1R illustrated in Fig. 4 are devices that store hydrogen and supply the hydrogen to the fuel cell 22. Specifically, the hydrogen tank devices 1F, 1R are connected to the fuel cell 22 via a supply pipe 34. The elements of the two hydrogen tank devices 1F, 1R are similar to each other, as illustrated in Fig. 5. The following description focuses on the elements of the first hydrogen tank device 1F, which is one of the two hydrogen tank devices 1F, 1R. The elements of the other hydrogen tank device, that is, the second hydrogen tank device 1R, will be described focusing on differences from those of the first hydrogen tank device 1F, and elements thereof that are the same as those of the first hydrogen tank device 1F will be assigned the same reference signs and description thereof will be omitted.

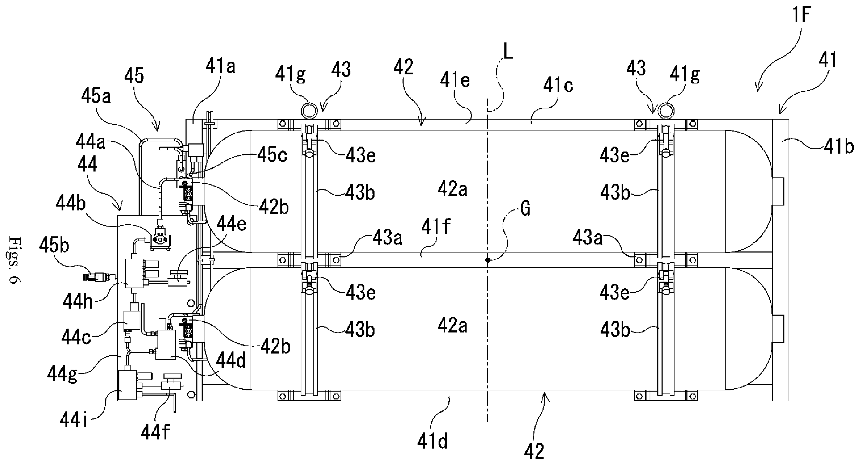

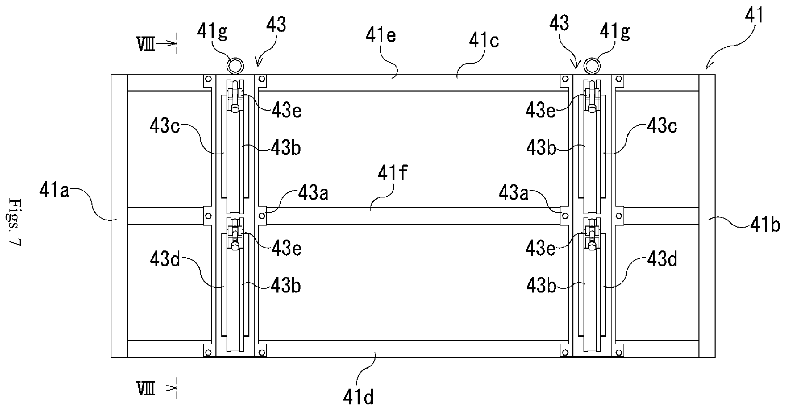

The first hydrogen tank device 1F includes a frame body 41 and a plurality of hydrogen tanks 42, as illustrated in Fig. 5. In the present embodiment, the first hydrogen tank device 1F includes two hydrogen tanks 42. The first hydrogen tank device 1F is integrated as a unit by attaching the two hydrogen tanks 42 to the frame body 41. The first hydrogen tank device 1F is mounted on a frame 24 of the excavator 2, which will be described in detail later (refer to Fig. 7 to be described in detail later). Since the first hydrogen tank device 1F is integrated as a unit as mentioned above, the ease of installation of the two hydrogen tanks 42 onto the excavator 2 is enhanced. More specifically, the first hydrogen tank device 1F further includes a plurality of mounting members 43, a supply system unit 44, and a filling system 45, as also illustrated in Fig. 6. Hereinafter, the elements of the first hydrogen tank device 1F will be described.

The frame body 41 is formed in a rectangular shape as viewed from one side in the first direction, as illustrated in Fig. 7. The frame body 41 is formed in the shape of a plate having a thickness in the first direction. More specifically, the frame body 41 includes four plate-shaped members 41a to 41d. In the present embodiment, the four plate-shaped members 41a to 41d are flat plates. The four plate-shaped members 41a to 41d are arranged on four sides (specifically, on the longitudinally opposite sides and the transversely opposite sides) so as to form a rectangle as viewed from the one side in the first direction and have a thickness on the one side in the first direction. In the present embodiment, the longitudinal direction, which is an example of the second direction, is a direction perpendicular to the first direction (in other words, the thickness direction), and the transverse direction is a direction perpendicular to the first direction and the longitudinal direction.

Furthermore, the frame body 41 includes a reinforcing plate 41f in the present embodiment. The reinforcing plate 41f extends between transversely intermediate portions of the plate-shaped members 41a, 41b on the longitudinally opposite sides to reinforce the frame body 41. Furthermore, the frame body 41 includes a mounting surface 41e on the one side in the first direction. The mounting surface 41e is the surface located on the one side in the first direction. The frame body 41 is configured to be mounted on the frame 24, which will be described later, by bringing the mounting surface 41e into abutment with the frame 24.

Furthermore, the frame body 41 includes a plurality of lifting lugs 41g. In the present embodiment, the frame body 41 includes two lifting lugs 41g. The lifting lugs 41b are arranged to be spaced apart from each other on portions located on one side in the transverse direction (on the plate-shaped member 41c in the present embodiment). More specifically, the lifting lugs 41g are positioned on the plate-shaped member 41c equidistantly on one side and the other side in the longitudinal direction from a center line L extending in the transverse direction and passing through a center of gravity G of the hydrogen tank device 1A as viewed in the first direction, as illustrated in Fig. 6. Each of the lifting lugs 41g can engage with a hook (not illustrated in the drawings) of a lifting device such as a crane. By engaging the two lifting lugs 41g with respective hooks, the hydrogen tank device 1F can be hoisted and transported by the lifting device.

The hydrogen tank 42 is elongated in an axial direction. The axial direction herein refers to a direction in which the axis of the hydrogen tank 42 extends. The hydrogen tank 42 can store hydrogen therein. The hydrogen tank 42 includes, for example, a tank body 42a and a tank valve 42b. The tank body 42a stores hydrogen, and the tank valve 42b is disposed at the port of the tank body 42a to seal the tank body 42a. Furthermore, the tank valve 42b controls the flow of hydrogen into and out of the tank body 42a.

The two hydrogen tanks 42 configured as described above are mounted on the frame body 41 by being arranged in the transverse direction such that the respective axes of the hydrogen tanks 42 extend in the longitudinal direction. More specifically, the two hydrogen tanks 42 are arranged in the transverse direction via the plurality of mounting members 43, which will be described in detail below, and mounted on the frame body 41. The two hydrogen tanks 42 are attached to the plurality of mounting members 43 so as to protrude from the frame body 41 on the other side in the first direction. The two hydrogen tanks 42 are disposed on the frame body 41 such that the respective tank valves 42b are positioned on one side in the longitudinal direction.

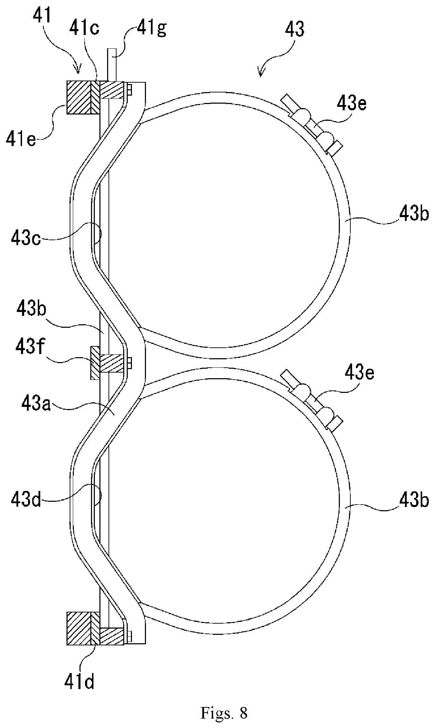

The plurality of mounting members 43 are arranged on the frame body 41 so as to be spaced apart from each other in the longitudinal direction. In the present embodiment, two mounting members 43 are disposed on the frame body 41. The mounting members 43 hold portions of each hydrogen tank 42 that are located on one side and the other side in the axial direction. Specifically, the mounting members 43 hold portions of each hydrogen tank 42 that are located on one side and the other side in the longitudinal direction. More specifically, the mounting member 43 includes a bridging part 43a and a securing part 43b, as illustrated in Fig. 8.

The bridging part 43a is disposed to extend between the transversely opposite portions of the frame body 41, namely, the plate-shaped members 41c, 41d located at the opposite ends in the transverse direction. More specifically, the bridging part 43a is disposed on the surface of the frame body 41 that is on the other side in the first direction (that is, the surface thereof opposite the mounting surface 41e) to extend between the plate-shaped members 41c, 41d. The intermediate portion of the bridging part 43a is secured to the reinforcing plate 41f in the present embodiment. More specifically, the bridging part 43a is, for example, a plate-shaped member having a ω-shaped cross-section and is formed in the shape of the letter W as viewed from one side in the longitudinal direction. Specifically, the bridging part 43a includes two recesses 43c, 43d. The bridging part 43a is mounted on the frame body 41 such that each of the recesses 43c, 43d is located between the reinforcing plate 41f and a corresponding one of the plate-shaped members 41c, 41d and is recessed on one side in the first direction. The hydrogen tanks 42 are disposed on the bridging part 43a such that portions of the hydrogen tanks 42 are seated within the respective recesses 43c, 43d. Portions of the peripheral surfaces of the two hydrogen tanks 42 that are located on one side and the other side in the longitudinal direction are pressed against the bridging parts 43a. Thus, the hydrogen tanks 42 are disposed on the two mounting members 43 so as to protrude on the other side in the first direction from the frame body 41.

The securing part 43b is for securing the hydrogen tank 42 to the bridging part 43a. With the peripheral surface pressed against the bridging part 43a, the hydrogen tank 42 is fastened by the securing part 43b and thereby mounted on the frame body 41. Thus, the hydrogen tank 42 is held by the mounting member 43. More specifically, the securing part 43b is, for example, a securing band, and is formed in the approximate shape of the letter U. Opposite end portions of the securing part 43b are secured to the transversely opposite ends of the recesses 43c, 43d of the bridging part 43a. The securing part 43b disposed in this manner surrounds, together with the recesses 43c, 43d, the peripheral surfaces of the hydrogen tanks 42a disposed in the recesses 43c, 43d. Furthermore, the securing part 43b includes an adjuster 43e, such as a threaded member, at an intermediate portion thereof; the length of the securing part 43b is adjustable by tightening the adjuster 43e. Therefore, by tightening the adjuster 43e, the securing part 43b can tightly grip the peripheral surface of the hydrogen tank 42, thereby securing the hydrogen tank 42 to the bridging part 43a. Thus, the hydrogen tank 42 is mounted on the frame body 41.

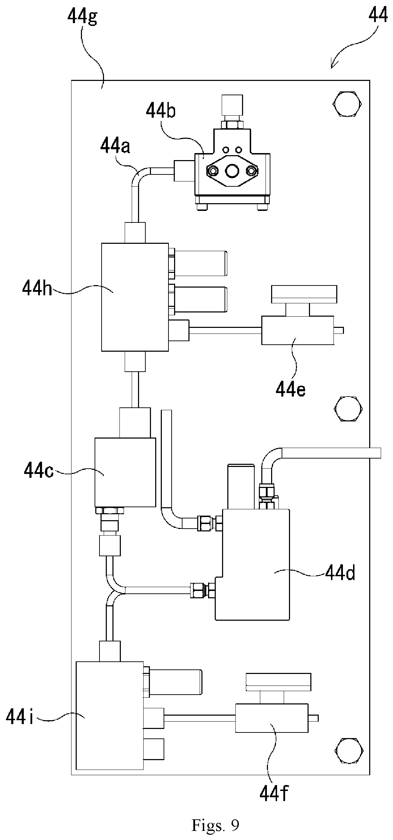

The supply system unit 44 includes a first piping member 44a, a plurality of valves 44b to 44f, and a mounting plate 44g, as illustrated in Fig. 9. The supply system unit 44 further includes a plurality of sensors 44h, 44i. The supply system unit 44 is integrated as a unit by mounting the first piping member 44a, the plurality of valves 44b to 44f, and the plurality of sensors 44h, 44i on the mounting plate 44g. The supply system unit 44 is mounted on the frame body 41 so as to be positioned on the one side in the longitudinal direction relative to the hydrogen tank 42, in other words, located adjacent to the tank valve 42b, as illustrated in Fig. 6. Hereinafter, the elements of the supply system unit 44 will be described in more detail.

The first piping member 44a is connected to the tank valve 42b of each of the two hydrogen tanks 42, as illustrated in Fig. 3. The hydrogen drained from each hydrogen tank 42 flows through the first piping member 44a. The plurality of valves 44b to 44f are disposed on the first piping member 44a, as illustrated in Fig. 9. The plurality of valves 44b to 44f control the flow of hydrogen. The plurality of valves 44b to 44f are, for example, five valves 44b to 44f, specifically, a high-pressure reducing valve 44b, a shut-off valve 44c, a low-pressure reducing valve 44d, a first manual valve 44e, and a second manual valve 44f. The pressure reducing valve 44b, the shut-off valve 44c, and the low-pressure reducing valve 44d are interposed on the first piping member 44a in the stated order from the tank side that is the upstream side. The first manual valve 44e is connected between the high-pressure reducing valve 44b and the shut-off valve 44c, and the second manual valve 44f is connected on the downstream side of the low-pressure reducing valve 44d. Furthermore, the low-pressure reducing valve 44d is connected to the supply pipe 34 via the sensor 44i, which will be described in detail later. Moreover, the low-pressure reducing valve 44d is connected to the fuel cell 22 via the supply pipe 34, as illustrated in Fig. 3. Accordingly, high-pressure tank stored in the hydrogen tank 42 can be reduced in pressure (for example, to 100 kPa) and then supplied to the fuel cell 22.

The plurality of sensors 44h, 44i are disposed on the first piping member 44a. In the present embodiment, two sensors 44h, 44i are disposed on the first piping member 44a. The two sensors 44h, 44i are, for example, pressure sensors. The first sensor 44h is connected, for example, between the high-pressure reducing valve 44b and the shut-off valve 44c. The second sensor 44i is connected on the downstream side of the low-pressure reducing valve 44d as mentioned above.

The first piping member 44a and the five valves 44b to 44f are mounted on the mounting plate 44g. Furthermore, the two sensors 44h, 44i are mounted on the mounting plate 44g. More specifically, the mounting plate 44g is a plate-shaped member that is rectangular as viewed in the first direction. Note that the shape of the mounting plate 44g is not limited to a rectangular shape and may alternatively be another shape. The first piping member 44a, the five valves 44b to 44f, and the two sensors 44h, 44i are mounted on the principal surface of the mounting plate 44g that is the surface thereof on one side in the thickness direction (the surface thereof on the other side in the first direction in the present embodiment). In the present embodiment, the high-pressure reducing valve 44b, the first sensor 44h, the shut-off valve 44c, and the low-pressure reducing valve 44d are arranged on the principal surface of the mounting plate 44g in the stated order from the one side in the longitudinal direction of the mounting plate 44g. Furthermore, portions of the first piping member 44a that connect the high-pressure reducing valve 44b, the first sensor 44h, the shut-off valve 44c, and the low-pressure reducing valve 44d are mounted on and secured to the mounting plate 44g. Moreover, the first manual valve 44e, the second manual valve 44f, and the second sensor 44i are connected to the first piping member 44a as branches thereof. Similar to the other valves 44b to 44d and the like, the first manual valve 44e, the second manual valve 44f, and the second sensor 44i are also arranged on the principal surface of the mounting plate 44g.

The mounting plate 44g is mounted on the surface of the frame body 41 opposite the mounting surface 41e, as illustrated in Fig. 6. Furthermore, the mounting plate 44g is mounted on the frame body 41 so as to be positioned on the one side in the longitudinal direction relative to the hydrogen tank 42. Thus, the valves 44b to 44f (more specifically, the high-pressure reducing valve 44b) can be positioned adjacent to the tank valve 42b.

The second hydrogen tank device 1R includes a second piping member 44j in addition to the frame body 41, the two hydrogen tanks 42, and the plurality of mounting members 43, as illustrated in Fig. 4. The second piping member 44j is connected to the tank valve 42b of each of the two hydrogen tanks 42. Furthermore, the second piping member 44j is connected to the first piping member 44a of the first hydrogen tank device 1F. The second piping member 44j merges the hydrogen from each hydrogen tank 42 of the second hydrogen tank device 1R into the first piping member 44a.

The filling system 45 illustrated in Fig. 6 is detachably connected to a filling nozzle of a hydrogen station or the like not illustrated in the drawings. The filling system 45 supplies the hydrogen received from the filling nozzle to each hydrogen tank 42 to replenish the hydrogen tank 42. The filling system 45 is mounted on the frame body 41 so as to be positioned on the one side in the longitudinal direction relative to the hydrogen tank 42, in other words, located adjacent to the tank valve 42b. As previously mentioned, supply system unit 44 is also disposed adjacent to the tank valve 42b. Thus, the filling system 45, the supply system unit 44, and the tank valve 42b are arranged in a cluster. The filling system 45 configured as just described includes a filling pipe 45a and a filling receptacle 45b. More specifically, the filling system 45 further includes a branching block 45c.

The filling pipe 45a is connected to each hydrogen tank 42. More specifically, the filling pipe 45a is connected to each hydrogen tank 42 via the branching block 45c, which will be described in detail later. In the present embodiment, the filling pipe 45a is connected to the tank valve 42b of each hydrogen tank 42 via the branching block 45c. The filling receptacle 45b is disposed on the hydrogen filling port (not illustrated in the drawings) of the excavator 2. The filling receptacle 45b is configured to removably receive the aforementioned filling nozzle. Furthermore, the filling receptacle 45b is connected to each hydrogen tank 42 via the filling pipe 45a. More specifically, the filling receptacle 45b is connected to each hydrogen tank 42 via the filling pipe 45a and the branching block 45c. In the present embodiment, the filling pipe 45a and the filling receptacle 45b are disposed adjacent to the tank valves 42b. The filling pipe 45a and the filling receptacle 45b are not mounted on the frame body 41 in the present embodiment, but at least one of the filling pipe 45a and the filling receptacle 45b may alternatively be mounted on the frame body 41.

The branching block 45c is connected to the four hydrogen tanks 42 and distributes the supplied hydrogen to each of the hydrogen tanks 42. Thus, each hydrogen tank 42 can be filled with hydrogen. The branching block 45 is disposed adjacent to the tank valve 42b. The branching block 45c is mounted, for example, on the frame body 41 (the mounting surface 41e in the present embodiment). Note that the branching block 45c may be a flow-dividing valve that divides the hydrogen flow for filling the hydrogen tanks 42.

In the filling system 45 configured as described above, the filling nozzle is connected to the filling receptacle 45b, and hydrogen is supplied therethrough. Accordingly, the hydrogen is brought to the branching block 45c through the filling pipe 45a. The branching block 45c distributes the hydrogen and supplies the hydrogen to the hydrogen tanks 42. Thus, the hydrogen tanks 42 are filled with the hydrogen.

### [Housing Structure for Hydrogen Tank Device]

The hydrogen tank devices 1F, 1R, along with the electric pump device 21 and the fuel cell 22, are housed in the slewing body 12, as mentioned above (refer to Fig. 3). The slewing body 12 is configured to house the electric pump device 21, the fuel cell 22, and the hydrogen tank devices 1F, 1R therein.

Specifically, the slewing body 12 includes, for example, a cabin 12a, a battery housing part 12b, and a tank housing part 12c, as illustrated in Figs. 1 to 3. The cabin 12a is configured to allow a driver (or an operator) to be seated therein. The cabin 12a is located, for example, in a front area of the slewing body 12 that is located on one side in the lateral direction, for example, the left side. Note that the position of the cabin 12a in the slewing body 12 is described on the premise that the boom 13 extends longitudinally. The same applies to the battery housing part 12b and the tank housing part 12c. The fuel cell 22 is housed in the battery housing part 12b. The battery housing part 12b is disposed in the front area of the slewing body 12, on the side opposite the cabin 12a, that is, on the other side in the lateral direction (for example, the right side). Furthermore, the boom 13 is disposed between the battery housing part 12b and the cabin 12a.

The electric pump device 21 and the hydrogen tank devices 1F, 1R are housed in the tank housing part 12c. The tank housing part 12c is disposed rearward of the cabin 12a and the battery housing part 12b. In other words, the tank housing part 12c extends laterally in a rear portion of the slewing body 12. The tank housing part 12c is located rearward of and adjacent to the cabin 12a. Furthermore, a passage 12d leading to the cabin 12a is interposed between the tank housing part 12c and the battery housing part 12b such that the tank housing part 12c is located rearward of the battery housing part 12b.

Moreover, the frame 24 is disposed on the tank housing part 12, as illustrated in Fig. 3. The electric pump device 21 and the hydrogen tank devices 1F, 1R are mounted on the frame 24. Accordingly, the electric pump device 21 and the hydrogen tank devices 1F, 1R are housed in the tank housing part 12c. Furthermore, the tank housing part 12c is covered by a cover 12e (refer to Fig. 3). An openable portion 12f is formed on the upper surface of the cover 12e (refer to Fig. 1). When the openable portion 12f is open, the frame 24 is exposed upward through the openable portion 12f.

The frame 24 is formed by combining a plurality of plate-shaped frame members. The frame 24 is a frame in the approximate shape of a laterally extending rectangular parallelepiped. The frame 24 is formed, for example, in the shape of the letter E as laterally viewed, that is, in a side view; the frame 24is placed in the tank housing part 12c with the letter E rotated 90 degrees such that the opening portion thereof faces upward. Therefore, the top of the frame 24 is free of laterally extending frame members, facilitating the insertion of the electric pump device 21 and the hydrogen tank devices 1F, 1R thereto from above, as will be described in detail later.

More specifically, the frame 24 incudes a base frame 24a and a plurality of upright parts 24b to 24d. The base frame 24 is formed, for example, in the shape of a rectangle laterally elongated in a plan view. The base frame 24a is placed, for example, on the base of the slewing body 12. In the present embodiment, the base frame 24a is reinforced by longitudinally and laterally reinforcing members.

The plurality of upright parts 24b to 24d are upstanding portions of the frame 24. Specifically, the plurality of upright parts 24b to 24d are disposed on the base frame 24a so as to extend upwardly. In the present embodiment, the frame 24 includes three upright parts 24b to 24d. The upright parts 24b to 24d are arranged to be spaced apart from each other in the longitudinal direction. In the present embodiment, the upright parts 24b to 24d are disposed on a longitudinally intermediate portion and longitudinally opposite ends of the base frame 24a. The upright parts 24b to 24d are formed, for example, in an inverted U-shape as viewed from the front, and are disposed on the base frame 24a so as to span between the laterally opposite ends thereof. Note that the upright parts 24b to 24d are also configured such that the U-shaped frames thereof are reinforced by vertically extending reinforcing members.

In the frame 24 configured as described above, the adjacent upright parts 24b to 24d form housing spaces 24e, 24f therebetween. The first upright part 24b includes a mounted surface 24g facing the housing space 24e, and the second upright part 24c includes a mounted surface 24h facing the housing space 24f. The two hydrogen tank devices 1F, 1R are mounted at predetermined positions of the upright parts 24b, 24c by mating the mounting surfaces 41e of the frame bodies 41 with the mounted surfaces 24g, 24h.

More specifically, the two hydrogen tank devices 1F, 1R are mounted on the frame 24 such that the longitudinal direction of the frame body 41 matches the lateral direction. In other words, the two hydrogen tank devices 1F, 1R are mounted on the frame 24 such that the respective axes of the hydrogen tanks 42 extend laterally. Thus, the two hydrogen tank devices 1F, 1R are housed in the housing spaces 24e, 24f of the frame 24 such that the respective axes of the hydrogen tanks 42 extend laterally. The two hydrogen tank devices 1F, 1R are arranged such that the supply system unit 44 is positioned on the right side. Therefore, the supply system unit 44 is disposed in the two hydrogen tank devices 1F, 1R, at a position proximate to the fuel cell 22. Note that the two hydrogen tank devices 1F, 1R are mounted on the frame 24 via welding or by fastening members such as bolts in the present embodiment. The profiles of the upright parts 24b to 24d of the frame 24 are set larger than the profiles of the frame bodies 41 of the hydrogen tank devices 1F, 1R in the present embodiment. More specifically, each of the upright parts 24b to 24d has a profile such that the supply system unit 44 mounted on the frame body 41 does not protrude beyond the upright parts 24b to 24d as viewed from the front.

Furthermore, the frame 24 houses the electric pump device 21 within the housing space 24e, in addition to the hydrogen tank device 1F. More specifically, the electric pump device 21 is disposed on the third upright part 24d side of the hydrogen tank device 1F in the housing space 24e. In the electric pump device 21, the hydraulic pump 31 and the electric motor 32 are arranged in a straight line, as mentioned above; the electric pump device 21 is disposed such that the hydraulic pump 31 and the electric motor 32 are laterally arranged. In the electric pump device 21, the hydraulic pump 31 is disposed on the left side (i.e., on the cabin 12a side), for example. Thus, the electric motor 32 can be proximate to the fuel cell 22, and the hydraulic pump 31 can be disposed at a distance from the supply system unit 44. Note that the electric pump device 21 is mounted on the frame 24 so as to be placed on the base frame 24a (more specifically, the reinforcing member for the base frame 24a) of the frame 24.

### [Method for Mounting Hydrogen Tank Device]

A method for mounting the hydrogen tank devices 1F, 1R on the frame 24 will be described below. First, the hydrogen tank devices 1F, 1R are integrated as a unit in advance, for example, by attaching the hydrogen tanks 42 and the supply system unit 44 to the frame body 41. Subsequently, the hydrogen tank devices 1F, 1R are mounted on the frame 24. In mounting the hydrogen tank devices 1F, 1R on the frame 24, the openable portion 12f of the slewing body 12 is opened in the excavator 2. As a result, the frame 24 is exposed upward. Each of the hydrogen tank devices 1F, 1R can be lifted by a lifting device not illustrated in the drawings. For example, hooks of the lifting device are engaged with the lifting lugs 41g of one of the hydrogen tank devices 1F, 1R, for example, the first hydrogen tank device 1F. Subsequently, the hydrogen tank device 1F is hoisted by the lifting device. Thus, the first hydrogen tank device 1F is lifted while maintaining the frame body 41 in an upright position and is then transported in this state to a position above the frame 24. Thereafter, the first hydrogen tank device 1F is lowered to the frame 24. More specifically, the first hydrogen tank device 1F is lowered to the housing space 24e. At this time, the mounting surface 41e of the frame body 41 in the first hydrogen tank device 1F is mated with the mounted surface 24g of the upright part 24b. Furthermore, the position of the first hydrogen tank device 1F is precisely aligned with a predetermined position on the upright part 24b. Subsequently, the first hydrogen tank device 1F at the predetermined position is mounted on the upright part 24b via welding or by fastening members. Thereafter, the first hydrogen tank device 1F is detached from the lifting device.

The second hydrogen tank device 1R is mounted on the upright part 24c by substantially the same method. Specifically, the second hydrogen tank device 1R is lifted by the lifting device and then lowered to the housing space 24f. At this time, the mounting surface 41e of the second hydrogen tank device 1R is mated with the mounted surface 24h of the upright part 24c. Furthermore, the position of the second hydrogen tank device 1R is precisely aligned with a predetermined position on the upright part 24c. The second hydrogen tank device 1R at the predetermined position is mounted on the upright part 24c via welding or by fastening members. Moreover, in the second hydrogen tank device 1R, the second piping member 44j is connected to the first piping member 44a. At the end, the filling receptacle 45b of the filling system 45 is attached to the filling port (not illustrated in the drawings) of the excavator 2. Thereafter, the second hydrogen tank device 1R is detached from the lifting device, and the openable portion 12f is closed.

In each of the hydrogen tank devices 1F, 1R according to the present embodiment, two hydrogen tanks 42 are mounted on the frame body 41. The frame body 41 is configured to be mounted on the frame 24. Therefore, the two hydrogen tanks 42 integrated as a unit can be mounted on the frame 24 of the excavator 2. This facilitates the mounting of the hydrogen tanks 42 on the excavator 2.

Furthermore, in the hydrogen tank devices 1F, 1R according to the present embodiment, the frame body 41 is mounted on the frame 24 standing in the excavator 2. Therefore, when the hydrogen tank devices 1F, 1R are lowered vertically and guided into position along the frame 24, the hydrogen tank devices 1F, 1R can be mounted on the frame 24. Thus, the hydrogen tank devices 1F, 1R are easily mounted on the frame 24.

Furthermore, in the hydrogen tank devices 1F, 1R according to the present embodiment, the frame body 41 includes two lifting lugs 41g spaced apart from each other on portions located on the one side in the transverse direction. Therefore, the hydrogen tank devices 1F, 1R can be hoisted, lowered vertically, and set against the frame 24. Thus, the hydrogen tank devices 1F, 1R can be easily mounted on the frame 24.

Furthermore, in the hydrogen tank devices 1F, 1R according to the present embodiment, the two hydrogen tanks 42 are mounted on the frame body 41 by attaching two mounting members 43 to the hydrogen tanks 42 such that the hydrogen tanks 42 protrude from the frame body 41 on the other side in the first direction. Thus, the two hydrogen tanks 42 can be mounted on the frame body 41 at the projected positions. Specifically, unlike the case where the frame body 41 has a three-dimensional shape such as a rectangular parallelepiped, the hydrogen tanks 42 do not need to be inserted and mounted on the frame body 41, the hydrogen tanks 42 are easily mounted on the frame body 41.

Furthermore, in the hydrogen tank devices 1F, 1R according to the present embodiment, the mounting members 43 hold the portions of the hydrogen tanks 42 that are located on one side and the other side in the longitudinal direction (on one side and the other side in the axial direction in the present embodiment). This allows the frame body 41 to tightly hold the hydrogen tanks 42.

Furthermore, in the hydrogen tank devices 1F, 1R according to the present embodiment, with the peripheral surface pressed against the bridging part 43a, the hydrogen tank 42 is fastened by the securing part 43b and thereby mounted on the frame body 41. Therefore, the hydrogen tank 42 can be easily secured to the frame body 41.

Furthermore, in the hydrogen tank device 1F according to the present embodiment, the supply system unit 44 includes the piping member 44a, the five valves 44b to 44f, and the mounting plate 44g, and is mounted on the frame body 41. Therefore, the supply system unit 44 can be pre-assembled and subsequently mounted on the frame body 41. This facilitates the manufacture of the hydrogen tank device 1F.

Furthermore, in the hydrogen tank device 1F according to the present embodiment, the two hydrogen tanks 42 are disposed on the frame body 41 such that the respective tank valves 42b are positioned on one side in the longitudinal direction. Furthermore, the supply system unit 44 is mounted on the frame body 41 so as to be positioned on the one side in the longitudinal direction relative to the hydrogen tank 42. This allows for a reduced distance between the tank valve 42b and the supply system unit 44; accordingly, the piping member 44a connecting the tank valve 42b and the supply system unit 44 can be shortened.

Furthermore, in the hydrogen tank device 1F according to the present embodiment, the mounting plate 44g is mounted on the surface of the frame body 41 opposite the mounting surface 41e. Furthermore, the piping member 44a and the five valves 44b to 44f are mounted on the principal surface of the mounting plate 44g that is located on the other side in the first direction. Therefore, when the hydrogen tank device 1F is mounted on the frame 24, the piping member 44a and the five valves 44b to 44f are disposed on the surface of the mounting plate 44g that faces away from the frame 24. This allows for improved visibility of the piping member 44a and the five valves 44b to 44f, therefore improving the maintainability of the piping member 44a and the five valves 44b to 44f.

The hydrogen tank device 1F according to the present embodiment further includes the filling pipe 45a and the filling receptacle 45b. Therefore, the filling system 45, which includes the filling pipe 45a and the filling receptacle 45b, can be pre-connected to each hydrogen tank 42 before the hydrogen tank device 1F is mounted on the frame body 41. Therefore, the mounting process for mounting the hydrogen tank device 1F on the excavator 2 can be facilitated.

Furthermore, as the excavator 2 according to the present embodiment, the excavator 2 having the above-described functions can be realized.

Furthermore, in the excavator 2 according to the present embodiment, the hydrogen tank devices 1F, 1R are mounted on the frame 24 such that the mounting surfaces 41e of the frame bodies 41 are brought into abutment with the upright parts 24b, 24c. Therefore, the plurality of hydrogen tanks 42 integrated as a unit are mounted on the frame 24 of the excavator 2. This facilitates the mounting of the hydrogen tanks 42 to the excavator 2.

### <Embodiment 2>

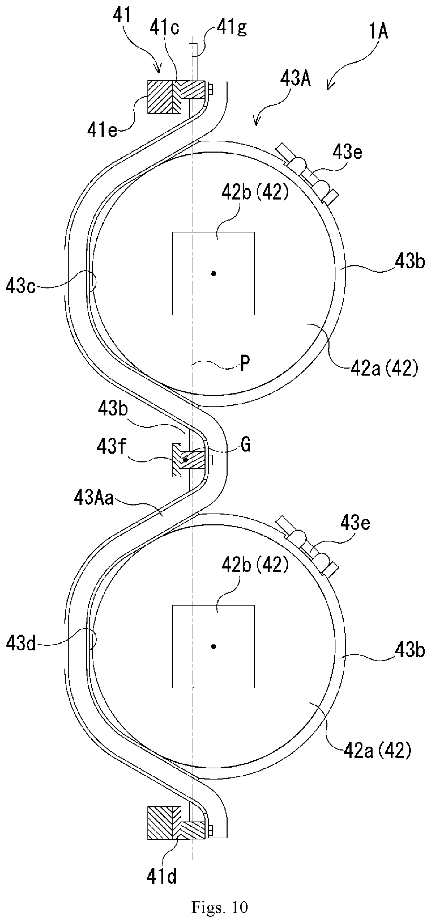

A hydrogen tank device 1A according to Embodiment 2 illustrated in Fig. 10 is installed in the excavator 2, similar to the hydrogen tank devices 1F, 1R according to Embodiment 1. The hydrogen tank device 1A according to Embodiment 2 includes elements similar to those of the hydrogen tank device 1F according to Embodiment 1. Therefore, the elements of the hydrogen tank device 1A according to Embodiment 2 will be described focusing on differences from the hydrogen tank device 1F according to Embodiment 1, and elements thereof that are the same as those according to Embodiment 1 will be assigned the same reference signs and description thereof will be omitted.

The hydrogen tank device 1A according to Embodiment 2 includes the frame body 41, the plurality of hydrogen tanks 42, a plurality of mounting members 43A, and the supply system unit 44. In the present embodiment, the hydrogen tank device 1A includes two hydrogen tanks 42 and two mounting members 43A. The mounting member 43A includes a bridging part 43Aa and the securing part 43b. The bridging part 43Aa is further recessed on the one side in the first direction relative to the bridging part 43a of the hydrogen tank device 1F according to Embodiment 1. Accordingly, each of the lifting lugs 41g of the frame body 41 is positioned on a virtual line P which, as viewed in the longitudinal direction, passes through a center of gravity G of the hydrogen tank device 1A and extends in the transverse direction. Therefore, when the hydrogen tank device 1A is lifted by a lifting device via the two lifting lugs 41g, the frame body 41 can be brought into a plumb orientation.

In the hydrogen tank device 1A according to the present embodiment, each of the lifting lugs 41g is positioned on the vertical line P, which as viewed in the longitudinal direction, passes through the center of gravity G of the hydrogen tank device 1A and extends in the transverse direction. Therefore, when the frame body 41 is lifted via the two lifting lugs 41g, the frame body 41 can be brought into a plumb orientation. Accordingly, the hydrogen tank device 1A is easily lowered vertically in a linear path and guided into position along the frame 24. Thus, the hydrogen tank device 1A can be easily mounted on the frame 24.

The hydrogen tank device 1A according to Embodiment 2 produces substantially the same advantageous effects as those produced by the hydrogen tank device 1F according to Embodiment 1.

### <Other Embodiments>

While the hydrogen tank devices 1F, 1R, 1A according to Embodiments 1 and 2 are installed in the excavator 2, these may alternatively be installed in other construction machines such as a wheel loader and a crane. As viewed from the one side in the first direction, the frame body 41 of each of the hydrogen tank devices 1F, 1R, 1A according to Embodiments 1 and 2 is rectangular, but this may alternatively have a trapezoidal shape, an oval shape, or another shape. Furthermore, the frame body 41 may alternatively be mounted on the base frame 24a, provided that the frame body 41 is mounted on the frame 24 of the construction machine 2. Moreover, the number of lifting lugs 41g included in the frame body 41 is not limited to two and may alternatively be three or more.

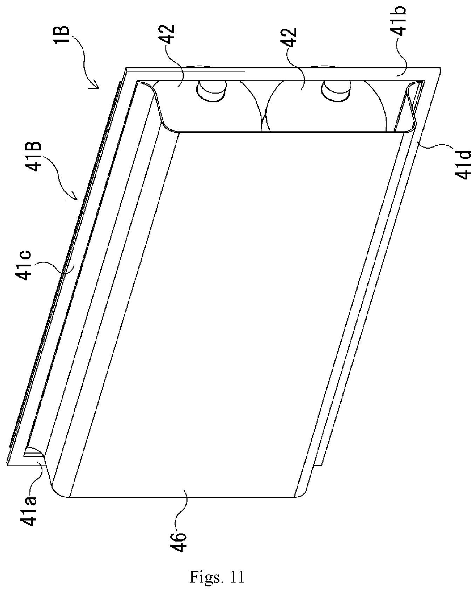

Furthermore, a reinforcing plate 46 may be mounted on a frame body 41B as in a hydrogen tank device 1B illustrated in Fig. 11. The reinforcing plate 46 is formed to have a U-shaped cross-section as viewed in the longitudinal direction. The reinforcing plate 46 is disposed to extend between the plate-shaped members 41c, 41d of the frame body 41B that are located at the transversely opposite ends. Note that the reinforcing plate 46 is not limited to the shape exemplified in Fig. 11. For example, the frame body 41 may be reinforced using a plurality of elongated plate members; any member capable of reinforcing the frame body 41 may be used as the reinforcing member.

Furthermore, the number of hydrogen tanks 42 included in the hydrogen tank devices 1F, 1R, 1A according to Embodiments 1 and 2 may alternatively be three or more. The number of mounting members 43 included in the hydrogen tank devices 1F, 1R, 1A according to Embodiments 1 and 2 may also be three or more; in this case, for example, an intermediate portion of the hydrogen tank 42 is also held by the mounting member 43. Furthermore, while the frame body 41 and the mounting member 43 of each of the hydrogen tank devices 1F, 1R, 1A are separately formed, these may alternatively be integrally formed. In the mounting member 43, the bridging part 43a and the securing part 43b may alternatively be integrally formed. Moreover, the configuration of the securing part 43b described above is merely exemplary; the securing part 43b may alternatively take the form of a zip tie or a belt.

Furthermore, the supply system unit 44 does not necessarily need to be mounted on the frame body 41 in close proximity to the tank valve 42b. Moreover, the supply system unit 44 may alternatively be mounted on the frame 24 or another member. While the supply system unit 44 includes the plurality of valves 44b to 44f, it is sufficient that the supply system unit 44 include at least the high-pressure reducing valve 44b. Furthermore, the supply system unit 44 may incorporate an injector in place of the high-pressure reducing valve 44b.

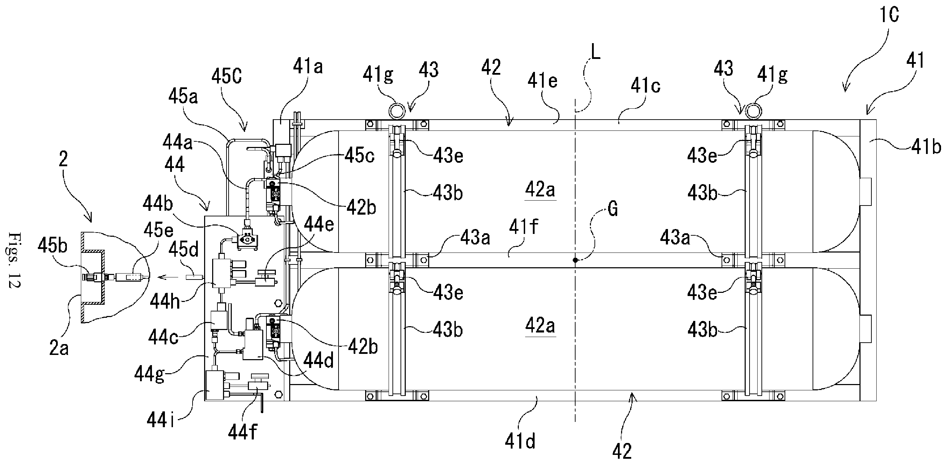

Furthermore, while the filling system 45 includes the filling receptacle 45b in the hydrogen tank devices 1F, 1R according to the present embodiment, the filling receptacle 45b is not necessarily required. The filling receptacle 45b may alternatively be disposed at a filling port 2a of the excavator 2 in advance, as illustrated in Fig. 12. In this case, a filling system 45C of a hydrogen tank device 1C illustrated in Fig. 12 includes a filling pipe 45a and a filling connector 45d. The filling connector 45d is detachably connected to the filling receptacle 45b. More specifically, the filling receptacle 45b includes a receptacle-end connector 45e. The filling connector 45d is connected to the receptacle-end connector 45e and thereby connected to the filling receptacle 45b. Accordingly, hydrogen supplied to the filling receptacle 45b can be distributed to the hydrogen tanks via the filling system 45C.

The hydrogen tank device 1C configured as described above further includes the filling pipe 45a and the filling connector 45d. Therefore, the filling system 45C, which includes the filling pipe 45a and the filling connector 45d, can be pre-connected to the hydrogen tank 42 before the hydrogen tank device 1C is mounted on the frame body 41. Therefore, the mounting process for mounting the hydrogen tank device 1C on the excavator 2 can be facilitated.

Furthermore, while the hydrogen tank devices 1F, 1R are vertically lowered and inserted into the frame 24, these may alternatively be slid laterally (specifically from the left or right) for insertion into the frame 24.

### <Exemplary Embodiments>

A hydrogen tank device according to the first aspect includes: a frame body that is plate-shaped and has a rectangular shape as viewed from one side in a first direction; and a plurality of hydrogen tanks mounted parallel to each other on the frame body, each of the plurality of hydrogen tanks extending in a longitudinal direction of the frame body. The frame body includes, on the one side in the first direction, a mounting surface to be mounted on a frame of a construction machine.

According to this aspect, the frame body on which the plurality of hydrogen tanks are mounted is configured to be mounted on the frame of the construction machine. Therefore, the plurality of hydrogen tanks integrated as a unit can be mounted on the frame of the construction machine. This facilitates the mounting of the hydrogen tanks on the construction machine.

A hydrogen tank device according to the second aspect is the hydrogen tank device according to the first aspect in which the frame body is mounted on an upright part of the frame disposed to extend upwardly in the construction machine.

According to this aspect, the frame body is mounted on the frame standing in the construction machine. Therefore, when the hydrogen tank device is lowered vertically and set against the frame, the hydrogen tank device can be mounted on the frame. Thus, the hydrogen tank device is easily mounted on the frame.

A hydrogen tank device according to the third aspect is the hydrogen tank device according to the first or second aspect in which the frame body includes at least a plurality of lifting lugs spaced apart from each other on portions on one side in a transverse direction.

According to this aspect, the frame body includes the plurality of lifting lugs spaced apart from each other on portions on the one side in the transverse direction. Therefore, the hydrogen tank device can be hoisted, lowered vertically, and guided into position along the frame. Thus, the hydrogen tank device can be easily mounted on the frame.

A hydrogen tank device according to the fourth aspect is the hydrogen tank device according to the third aspect in which each of the plurality of lifting lugs is positioned on a virtual line that, as viewed in the longitudinal direction, passes through a center of gravity of the hydrogen tank device and extends in the transverse direction.

According to this aspect, each lifting lug is positioned on the virtual line that, as viewed in the longitudinal direction, passes through the center of gravity of the hydrogen tank device and extends in the transverse direction. Therefore, when the frame body is lifted via two lifting lugs, the frame body can be brought into a plumb orientation. Accordingly, the hydrogen tank device is easily lowered vertically in a linear path and guided into position along the frame. Thus, the hydrogen tank device can be easily mounted on the frame.

A hydrogen tank device according to the fifth aspect is the hydrogen tank device according to any one of the first to fourth aspects that further includes: a plurality of mounting members arranged on the frame body and spaced apart in the longitudinal direction. The plurality of hydrogen tanks are mounted on the frame body via the plurality of mounting members, and are attached to the plurality of mounting members so as to protrude from the frame body on the other side in the first direction.

According to this aspect, the plurality of hydrogen tanks are mounted on the frame body by attaching the plurality of mounting members to the plurality of hydrogen tanks such that the plurality of hydrogen tanks protrude from the frame body on the other side in the first direction. Thus, the hydrogen tanks can be mounted on the frame body at the projected positions, facilitating the mounting of the hydrogen tanks on the frame body.

A hydrogen tank device according to the sixth aspect is the hydrogen tank device according to the fifth aspect in which the plurality of mounting members hold portions of each of the plurality of hydrogen tanks that are located on one side and the other side in the longitudinal direction.

According to this aspect, the mounting members hold portions of each hydrogen tank that are located on one side and the other side in the longitudinal direction. This allows the frame body to tightly hold the hydrogen tanks.

A hydrogen tank device according to the seventh aspect is the hydrogen tank device according to the fifth or sixth aspect in which each of the plurality of mounting members includes: a bridging part extending between transversely opposite portions of the frame body; and a securing part that secures a corresponding one of the plurality of hydrogen tanks to the bridging part, and with a peripheral surface pressed against the bridging part, the corresponding one of the plurality of hydrogen tanks is fastened by the securing part and thereby mounted on the frame body.

According to this aspect, with the peripheral surface pressed against the bridging part, the hydrogen tank is fastened by the securing part and thereby mounted on the frame body. Therefore, the hydrogen tank can be easily secured to the frame body.

A hydrogen tank device according to the eighth aspect is the hydrogen tank device according to any one of the first to seventh aspects that further includes: a supply system unit including a piping member connected to a tank valve at a port of each of the plurality of hydrogen tanks, a valve disposed on the piping member, and a mounting plate on which the piping member and the valve are mounted. The supply system unit is mounted on the frame body.

According to this aspect, the supply system unit includes the piping member, a plurality of the valves, and the mounting plate, and is mounted on the frame body. Therefore, the supply system unit can be pre-assembled and subsequently mounted on the frame body. This facilitates the manufacture of the hydrogen tank device.

A hydrogen tank device according to the ninth aspect is the hydrogen tank device according to the eighth aspect in which each of the plurality of hydrogen tanks is disposed on the frame body such that the tank valve is positioned on one side in the longitudinal direction, and the supply system unit is mounted on the frame body so as to be positioned on the one side in the longitudinal direction relative to a hydrogen tank included in the plurality of hydrogen tanks.

According to this aspect, each of the plurality of hydrogen tanks is disposed on the frame body such that the tank valve is positioned on the one side in the longitudinal direction. Furthermore, the supply system unit is mounted on the frame body so as to be positioned on the one side in the longitudinal direction relative to the hydrogen tank. This allows for a reduced distance between the tank valve and the supply system unit; accordingly, the piping member connecting the tank valve and the supply system unit can be shortened.

A hydrogen tank device according to the tenth aspect is the hydrogen tank device according to the eighth or ninth aspect in which the mounting plate is mounted on a surface of the frame body opposite the mounting surface, and the piping member and a plurality of the valves are mounted on a principal surface of the mounting plate that is located on the other side in the first direction.

According to this aspect, the mounting plate is mounted on the surface of the frame body opposite the mounting surface. Furthermore, the piping member and a plurality of the valves are mounted on the principal surface of the mounting plate that is located on the other side in the first direction. Therefore, when the hydrogen tank device is mounted on the frame, the piping member and the plurality of valves are disposed on the surface of the mounting plate that faces away from the frame. This allows for improved visibility of the piping member and the plurality of valves, therefore improving the maintainability of the piping member and the plurality of valves.

A hydrogen tank device according to the eleventh aspect includes: a frame body that is plate-shaped, has a thickness in a first direction, and extends in a second direction; a plurality of hydrogen tanks mounted parallel to each other on the frame body, each of the plurality of hydrogen tanks extending in the second direction of the frame body; and a plurality of mounting members arranged on the frame body and spaced apart in the second direction. The frame body includes, on one side in the first direction, a mounting surface to be mounted on a frame of a construction machine. The plurality of hydrogen tanks are mounted on the frame body by attaching the plurality of mounting members to the plurality of hydrogen tanks such that the plurality of hydrogen tanks protrude from the frame body on the other side in the first direction.

According to this aspect, the plurality of hydrogen tanks are mounted on the frame body by attaching the plurality of mounting members to the plurality of hydrogen tanks such that the plurality of hydrogen tanks protrude from the frame body on the other side in the first direction. Thus, the plurality of hydrogen tanks can be mounted on the frame body at the projected positions, facilitating the mounting of the hydrogen tanks on the frame body.

A hydrogen tank device according to the twelfth aspect is the hydrogen tank device according to any one of the first to eleventh aspects that further includes: a filling pipe connected to each of the plurality of hydrogen tanks; and a filling receptacle connected to each of the plurality of hydrogen tanks via the filling pipe.

According to this aspect, the filling pipe and the filling receptacle are further included. Therefore, the filling system including the filling pipe and the filling receptacle can be pre-connected to the hydrogen tank before the hydrogen tank device is mounted on the frame body. Therefore, the mounting process for mounting the hydrogen tank device on the construction machine can be facilitated.

A hydrogen tank device according to the thirteenth aspect is the hydrogen tank device according to any one of the first to eleventh aspects that further includes: a filling pipe connected to each of the plurality of hydrogen tanks; and a filling connector connected to a filling receptacle of the construction machine.

According to this aspect, the filling pipe and the filling connector are further included. Therefore, the filling system including the filling pipe and the filling connector can be pre-connected to the hydrogen tank before the hydrogen tank device is mounted on the frame body. Therefore, the mounting process for mounting the hydrogen tank device on the construction machine can be facilitated.

A construction machine according to the fourteenth aspect includes: the hydrogen tank device according to any one of the first to thirteenth aspects; a fuel cell that generates electric power using hydrogen supplied from the hydrogen tank device; and an electric pump device that is driven by the electric power supplied from the fuel cell.

According to this aspect, a construction machine having the above-described functions can be realized.

A construction machine according to the fifteenth aspect includes: a hydrogen tank device including a frame body that is plate-shaped, has a thickness in a first direction, and extends in a second direction, and a plurality of hydrogen tanks mounted parallel to each other on the frame body, each of the plurality of hydrogen tanks extending in the second direction; and a frame including an upright part standing in a manner to extend upwardly. The hydrogen tank device is mounted on the frame such that a mounting surface of the frame body located on one side in the first direction is brought into abutment with the upright part.

According to this aspect, the hydrogen tank device is mounted on the frame such that the mounting surface of the frame body located on the one side in the first direction is brought into abutment with a side surface of the frame. Therefore, the plurality of hydrogen tanks integrated as a unit are mounted on the frame of the construction machine. This facilitates the mounting of the hydrogen tanks on the construction machine.

From the foregoing description, many modifications and other embodiments of the present disclosure would be obvious to a person having ordinary skill in the art. Therefore, the foregoing description should be interpreted only as an example and is provided for the purpose of teaching the best mode for carrying out the present disclosure to a person having ordinary skill in the art. Substantial changes in details of the structures and/or functions of the present disclosure are possible within the spirit of the present disclosure.

## Claims

1. A hydrogen tank device comprising:
a frame body that is plate-shaped and has a rectangular shape as viewed from one side in a first direction; and
a plurality of hydrogen tanks mounted parallel to each other on the frame body, each of the plurality of hydrogen tanks extending in a longitudinal direction of the frame body, wherein
the frame body includes, on the one side in the first direction, a mounting surface to be mounted on a frame of a construction machine.

2. The hydrogen tank device according to claim 1, wherein
the frame body is mounted on an upright part of the frame disposed to extend upwardly in the construction machine.

3. The hydrogen tank device according to claim 1, wherein
the frame body includes at least a plurality of lifting lugs spaced apart from each other on portions on one side in a transverse direction.

4. The hydrogen tank device according to claim 3, wherein
each of the plurality of lifting lugs is positioned on a virtual line that, as viewed in the longitudinal direction, passes through a center of gravity of the hydrogen tank device and extends in the transverse direction.

5. The hydrogen tank device according to claim 1, further comprising:
a plurality of mounting members arranged on the frame body and spaced apart in the longitudinal direction, wherein
the plurality of hydrogen tanks are mounted on the frame body via the plurality of mounting members, and are attached to the plurality of mounting members so as to protrude from the frame body on the other side in the first direction.

6. The hydrogen tank device according to claim 5, wherein
the plurality of mounting members hold portions of each of the plurality of hydrogen tanks that are located on one side and the other side in the longitudinal direction.

7. The hydrogen tank device according to claim 5, wherein
each of the plurality of mounting members includes: a bridging part extending between transversely opposite portions of the frame body; and a securing part that secures a corresponding one of the plurality of hydrogen tanks to the bridging part, and
with a peripheral surface pressed against the bridging part, the corresponding one of the plurality of hydrogen tanks is fastened by the securing part and thereby mounted on the frame body.

8. The hydrogen tank device according to claim 1, further comprising:
a supply system unit including a piping member connected to a tank valve at a port of each of the plurality of hydrogen tanks, a valve disposed on the piping member, and a mounting plate on which the piping member and the valve are mounted, wherein
the supply system unit is mounted on the frame body.

9. The hydrogen tank device according to claim 8, wherein
each of the plurality of hydrogen tanks is disposed on the frame body such that the tank valve is positioned on one side in the longitudinal direction, and
the supply system unit is mounted on the frame body so as to be positioned on the one side in the longitudinal direction relative to a hydrogen tank included in the plurality of hydrogen tanks.

10. The hydrogen tank device according to claim 8, wherein
the mounting plate is mounted on a surface of the frame body opposite the mounting surface, and
the piping member and a plurality of the valves are mounted on a principal surface of the mounting plate that is located on the other side in the first direction.

11. A hydrogen tank device comprising:
a frame body that is plate-shaped, has a thickness in a first direction, and extends in a second direction;
a plurality of hydrogen tanks mounted parallel to each other on the frame body, each of the plurality of hydrogen tanks extending in the second direction of the frame body; and
a plurality of mounting members arranged on the frame body and spaced apart in the second direction, wherein
the frame body includes, on one side in the first direction, a mounting surface to be mounted on a frame of a construction machine, and
the plurality of hydrogen tanks are mounted on the frame body by attaching the plurality of mounting members to the plurality of hydrogen tanks such that the plurality of hydrogen tanks protrude from the frame body on the other side in the first direction.

12. The hydrogen tank device according to claim 1, further comprising:
a filling pipe connected to each of the plurality of hydrogen tanks; and
a filling receptacle connected to each of the plurality of hydrogen tanks via the filling pipe.

13. The hydrogen tank device according to claim 1, further comprising:
a filling pipe connected to each of the plurality of hydrogen tanks; and
a filling connector connected to a filling receptacle of the construction machine.

14. A construction machine comprising:
the hydrogen tank device according to any one of claims 1 to 13;
a fuel cell that generates electric power using hydrogen supplied from the hydrogen tank device; and
an electric pump device that is driven by the electric power supplied from the fuel cell.

15. A construction machine comprising:
a hydrogen tank device including a frame body that is plate-shaped, has a thickness in a first direction, and extends in a second direction, and a plurality of hydrogen tanks mounted parallel to each other on the frame body, each of the plurality of hydrogen tanks extending in the second direction; and
a frame including an upright part standing in a manner to extend upwardly, wherein
the hydrogen tank device is mounted on the frame such that a mounting surface of the frame body located on one side in the first direction is brought into abutment with the upright part.
